# EUROPEAN PATENT APPLICATION

(11) **EP 2 282 030 A2**
(43) Date of publication of application: **09.02.2011**
(21) Application number: 10169096.4
(22) Date of filing: 09.07.2010
(51) Int. Cl.: F02C 3/30, F02C 7/143

(54) **Spray system, power augmentation system for engine containing spray system and method of humidifying air**

(30) Priority: 26.06.2009 US 492666
(71) Applicant: Gas Turbine Efficiency Sweden AB, 175 27 Järfälle (SE)
(72) Inventor: Bland, Robert, Oviedo, FL 32765 (US)
(74) Representative: Epping, Wilhelm

(57) **Abstract**

The present invention is spray system such as a nozzle array, for more effectively and efficiently delivering liquid spray to air before its intake into an engine, a power augmentation system for an engine comprising the spray system and a method for more effectively humidifying air. The system is comprised of a plurality of independently-operable nozzle stages, which divide the flow path into a plurality of subsections. A group of nozzle stages comprise a unit of the system, which is comprised of a plurality of repeating units. The units are spaced to allow air flow through. The nozzle array is configured to substantially equally humidify the air through each subsection. The design of the nozzle array achieves more uniform mixing of air and water close to the point of injection of the air and water across the entire water injection range. As such, it maximizes the time available for evaporation by the drops in air that is not oversaturated.

## Description

### FIELD OF THE INVENTION

The present invention relates to a liquid spray system, a power augmentation system that contains the spray system and method for more effectively humidifying air and increasing the output of an engine. The spray system and power augmentation system may be used to increase the output of an engine.

### BACKGROUND

A gas turbine engine includes a compressor that provides pressurized air to a combustor. Air is mixed with fuel in the combustor and ignited, generating hot combustion gases. These gases flow to a turbine section where energy is extracted to power the compressor and provide useful work, such as powering an aircraft.

Turbine output decreases in proportion to increases in ambient air temperature. However, with increased ambient air temperature often comes demand for more power generation, for example, due to high air conditioning loads. Therefore, it is desirable to generate additional power through auxiliary systems during increased power demand periods.

One auxiliary system for increasing power input has nozzles that spray small droplets of liquid, usually water, toward the inlet duct of the compressor or the compressor bell mouth. These systems attempt to humidify the air at a new lower temperature, as it enters the gas turbine. A lower air temperature corresponds to a higher density of the air, and therefore, a higher mass flow that results in a higher turbine shaft output. The amount of liquid that must be added to the air to sufficiently lower the temperature is determined by the gas turbine air flow rate, the ambient temperature and humidity conditions.

Liquid spray systems are a relatively cheap and "low-tech" method for producing more power. However, liquid in the compressor can damage the compressor blades. For example, bombardment of a metal surface with liquid droplets can lead to the development of micro-fractures in the metal's surface and can cause surface pitting. To avoid liquid hitting the blades, the spray should substantially evaporate in the compressor before hitting the blades. This evaporation is also what humidifies the intake air, which, as provided above, is needed to lower the air temperature and density. To increase the likelihood that the liquid droplets evaporate before hitting the blades, droplets having small diameters must be produced. Small diameters are generally less than about 40 microns. Spray liquid having such small diameters is often said to be "fogged" and systems producing many small diameter droplets are often called fogging systems.

Droplets of such small size may be produced using a few methods. Often, the simplest method is to provide high pressure liquid, usually at about 3000 psi, from a skid, to atomize the drops directly. Other methods may include passing the liquid through a shock wave or through ultrasonic atomizers. High pressure liquid results in an average size drop of the order of about 10 to about 20 microns but larger drops; i.e., those greater than 20 microns and up to about 40 microns, are generated as well.

There may be some problems with the aforementioned method of producing droplets of liquid. In particular, requiring the skid to deliver the highly-pressurized liquid at 3000 psi may put a strain on the skid. In addition, because the nozzles are required to spray the highly pressurized liquid, they have a relatively small area of operation.

To attempt to solve this problem, existing nozzle arrays may have multiple stages. Each liquid-carrying pipe of the array may have a plurality of nozzles for spraying the liquid mist. A number of pipes are manifolded together or are in communication to form a stage. A stage is simply a number of nozzles connected to a single liquid source that are independently controllable. The General Electric SPRITS^{™} system; a conventional system, contains five stages. In that system, when stage one is activated, liquid runs to the pipes manifolded together to form stage one and liquid is sprayed from only those nozzles. Other stages may then be activated with or without deactivating stage one.

Conventional systems often suffer from local oversaturation and under humidification. These problems result from too many nozzles activated versus the required water flow rate. Conventional arrays are designed in a way such that the air/water ratio is balanced only with respect to the entire cross-sectional area of the duct or flow area of the air.

Further, most conventional systems run each stage at a constant pressure, which is set by a recirculation system. All nozzles in a subsection flow at only the maximum flow rate. For example, at half flow, approximately half the pipes flow rather than all of the pipes flowing at half potential. Thus, a subsection of air may become saturated, which means that any additional water is not evaporated and is free to contact the blades. Moreover, the larger; i.e., 40 micron drops as opposed to the smaller; i.e., humidifying the air. The un-evaporated larger drops can coagulate to form streaks of liquid in the compressor, which can cause a great deal of damage. Further, because this design creates areas of over-saturation, it also creates areas of extremely dry air. The nozzles of the conventional systems are not positioned to allow the oversaturated areas to mix with the dry areas close to the nozzle array and, therefore, have enough time to evaporate before nearing the blades.

### SUMMARY

The present invention is an apparatus, such as a nozzle array, for more effectively and efficiently delivering liquid spray to air before its intake into an engine and a power augmentation system for an engine comprising the apparatus. The liquid spray lowers the temperature of the air, which increases the air's density. More dense air provides more power to the engine. The design of the nozzle array achieves more uniform mixing of air and water close to the point of injection of the air and water across the entire water injection area. As such, it maximizes the time available for evaporation. The better mixture that can be created in a "mixing zone" near the array, the more even the mixture will be downstream and the greater likelihood that the air will substantially evaporate before nearing the turbine.

In one embodiment, the present invention is a power augmentation system. The system comprises a passage having at least one air inlet. The passage is configured to allow the passage of air through the passage. A turbine is positioned downstream of the air inlet. A nozzle array is positioned downstream of the air inlet and upstream of the turbine. The nozzle array comprises a plurality of stages and defines a plurality of subsections of a cross section of the passage through which air passes as it moves through the nozzle array toward the turbine. Each stage comprises a plurality of nozzles configured to humidify the air moving through the subsections by spraying liquid. Each stage is configured to spray varying amounts of liquid and the stages are configured to substantially equally humidify the air flowing through each subsection at any amount of liquid spray.

In another embodiment, the present invention is a method of humidifying air for increasing output of an engine. The method comprises providing an air passage having at least one air inlet and a total cross-sectional area through which air flows, providing a plurality of stages of nozzles, each stage comprising a plurality of nozzles configured to inject liquid into the air, each stage having a water flow operating range, dividing the cross-sectional area of the passage into a plurality of subsections, each having an area smaller than the total cross-sectional area, providing an engine down stream of the air inlet and the stages of nozzles, determining a temperature and humidity of the air at a first time, determining an amount of humidity required to increase the output of the engine and providing, via the nozzles, a first amount of liquid to each subsection, wherein the first amount of liquid is that which is required to substantially equally humidify the air flowing through each particular subsection, across the entire water flow operating range, in the amount required to increase the output of the engine.

In another embodiment, the present invention is a method of humidifying air. The method comprises providing an air passage having at least one air inlet and a total cross-sectional area through which air flows, dividing the cross-sectional area of the passage into a plurality of subsections, each having an area smaller than the total cross-sectional area, providing a plurality of nozzles adjacent each subsection, the nozzles configured to inject liquid into air, providing to each subsection, an amount of a liquid required to substantially equally humidify the air flowing through each particular subsection, across an entire water flow operating range.

### BRIEF DESCRIPTION OF THE DRAWINGS

For the purpose of illustration, the drawings show forms that are presently preferred. However, it should be understood that the invention is not limited to the precise arrangements and instrumentality shown in the drawings.

FIG. 1 is a side plan view of a system for augmenting power to a turbine engine used in a power service station.

FIG. 2A is plan view of a conventional nozzle array for augmenting power of a turbine engine.

FIG. 2B is a side plan view of at least two different, typical stages in the conventional array shown in FIG. 2A, simplified for clarity.

FIG. 3 is a perspective view of one embodiment of the nozzle array of the present invention, positioned relative to a silencer.

FIG. 4A is a perspective view of one unit of the nozzle array shown in FIG. 3.

FIG. 4B is a rear plan view of the unit shown in FIG. 4A.

FIG. 4C is a bottom plan view of the unit shown in FIG. 4A.

FIG. 5 is a plan view of a portion of the nozzle array shown in FIG. 3.

FIG. 6 is a graph showing Fraction of Saturation versus Fractional Flow for a conventional array and one embodiment of the array of the present invention.

### DETAILED DESCRIPTION

Referring now to the drawings wherein like numerals identify like elements, there is shown various representations of an apparatus, such as a nozzle array, for more effectively and efficiently delivering liquid to air before its intake into an engine. Also shown is a power augmentation system for an engine comprising the apparatus. The various aspects of embodiments of the present invention can be utilized with virtually any type of engine. One type of engine suited for use with the power augmentation system is a gas turbine engine.

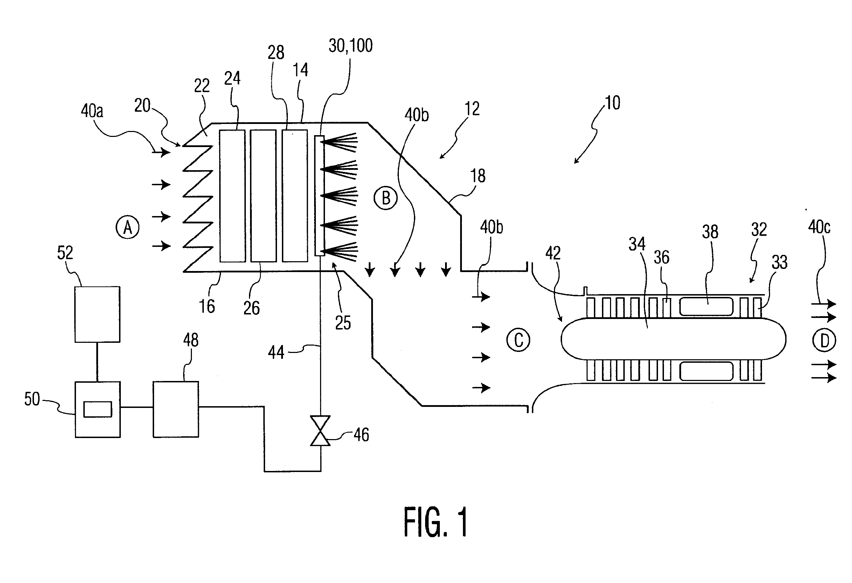

FIG. 1 shows an embodiment of a system 10 for augmenting power to a gas turbine. The system 10 is described with respect to a power station service, however, the system 10 may be used in other environments. The system comprises a passage or duct 12. The duct 12 comprises an upper wall 14 and a lower wall 16, and at least one bend 18. Duct 12 also has opposing sidewalls (not shown in FIG. 1). Duct 12 may have virtually any cross-sectional shape such as square, rectangular, oval, circular, etc. Duct 12 has a cross-sectional area that may or may not be uniform. Duct 12 also comprises an inlet section 20, which may comprise a weather louver 22. Downstream of the inlet section 20 and within the duct 12, may be a trash screen 24, air filter 26 and silencer 28. Downstream of the silencer 28 and within the duct 12 is an apparatus 30, 100 for cooling inlet air 40a. Such an apparatus may be a nozzle array.

Downstream of the apparatus 30, 100 for cooling inlet air 40a is a turbine or an engine 32 such as a gas turbine. Gas turbine engines are known in the art and may comprise a rotor with blades. At the front end of the shaft, a compressor 34 having compressor blades 36 compresses air to high pressure, for example, typically 10 to 30 times its typical pressure. The compressed air is delivered to a combustor 38. Fuel (not shown) is fired in the combustor 38. The hot combustion gases expand through the turbine 33 and leave the plant through an exhaust duct (not shown). Since the turbine power output is greater than the compressor power requirement, surplus power is available on the shaft. The surplus power is used for driving loads such as a generator, a pump, a compressor, a propeller or alike (not shown).

As shown in FIG. 1, ambient air 40a having a first temperature, which is generally ambient temperature, and a first humidity level, flows into inlet 20 of duct 12. Ambient air 40a then passes through optional trash screen 24, optional air filter 26 and optional silencer 28. The flow of ambient air 40a past the weather louver 22, trash screen 24, filter 26 and silencer 28, typically has a velocity ranging from about 10 meters/second to about 20 meters/second.

Ambient air 40a then passes through air cooling apparatus 30, 100 or nozzle array where it is cooled and humidified by liquid ejected from the apparatus. At least a portion 40b of air 40a, now has a second temperature, which is lower than the first temperature. In addition, at least a portion 40b of the air 40a may have a second humidity level, which may be greater than air 40a. At least a portion of the air 40b may be humidified by liquid. The cooled and humidified air 40b then moves from area B and into area C while generally maintaining its velocity. The air 40b enters the inlet plenum section 42 of the engine 32. Inlet plenum 42 may be shaped as a bell mouth to allow for acceleration of the air 40b. At the compressor 34 inlet face, the air velocity typically ranges from about 0.4 mach to about 0.6 mach; more typically, a velocity that is about half the speed of sound or about 180 m/s. The air is accelerated to obtain the high velocity required by the compressor to accomplish the compression work. Typical air compression ratios range from about 9:1 to about 30:1. Once inside the compressor, the air velocity is reduced as a function of the higher density resulting from compression. The compressed air (not shown) is then delivered to the combustor. When passing into the combustor chamber velocities are typically less than 100 m/s, although other velocities may be provided as desired.

The apparatus 30, 100 for providing a generally cool liquid to air before air reaches the inlet of the compressor is often an array of nozzles. As shown in FIG. 1, the nozzle array 30, 100 is in communication with at least one liquid inlet conduit 44. The liquid inlet conduit 44 is in communication with at least one skid (not shown) via an optional valve 46. The valve 46 may be configured to control a flow or flow rate of liquid being fed to at least one nozzle of the apparatus 30, 100.

The skid has at least one pump 48. In one embodiment, there may be two pumps, each being a variable frequency drive (VFD) pump where the speed is governed by frequency and where the appropriate frequency is set by a frequency controller. In another embodiment, there are multiple parallel pumps, for example, five pumps, each one with different flow capacities. By running one, two or more pumps in different combinations, a large range of pump capacities may be covered.

The pump's maximum capacity may be set in relation to the rated gas turbine's air flow. Preferably, the pump provides lower pressure liquid than many existing pumps. In particular, it operates at less than about 3000 psi and, preferably, at about 2000 psi. The pump may use a pre-fill system. The pump may be more reliable because it operates at lower pressure and there may be no recirculation back to the pump because the pump does not re-circulate liquid. This may lower the temperature of the liquid into the pump and prevent debris from reentering the pump. It also provides less wear on the rotating seals and improves piston-seal life.

The pump 48 may be in communication with at least one control unit or controller 50 via a signal feed, which controls the speed/operation of the pump or pumps. The control unit 50 may be located on the skid. The control unit 50 may employ predetermined engine cycle analysis to form a control model based on at least one defined parameter comprising ambient weather conditions, turbine geometry, velocity field of air movement and specifications of particular turbine components.

The pump 48 is also in communication with a liquid source 52. The liquid source 52 is preferably located on the skid. Preferably, the liquid source 52 comprises a source of water, however, other liquids may be used depending upon the cooling operation.

The system 10 may also comprise a weather monitoring unit (not shown) connected to the control unit by a signal, where ambient conditions that affect the gas turbine's performance can be measured and reported to the control unit for engine-cycle-based scheduling determination of the proper quantity of liquid to deliver a target level of inlet air humidification. The ambient conditions comprise environmental factors that may influence the operation of the gas turbine, including but limited to, temperature, humidity and air pressure. The ambient temperature, humidity and air pressure may be determined at predetermined times. In one embodiment, each of temperature, humidity and air pressure are then monitored; preferably continuously. The weather monitoring unit (details not shown) may comprise a dry bulb thermometer and an air humidity measuring device. In other embodiments, the weather monitoring unit can comprise a dry bulb thermometer and a wet bulb thermometer. The weather monitoring unit may comprise other components and/or combinations of components to monitor and/or measure ambient weather conditions. The weather information is processed by the control unit, where the control unit delivers to the operator key operational information such as allowable evaporation water quantity, icing risk, etc. This information may, for example, be presented for the operator on the display (not shown). A determination of the amount of liquid or humidity required to increase the output of the engine in a desired amount, may then be determined.

The air cooling apparatus 30, 100 or nozzle array delivers, generally as a spray, cool liquid to the ambient air 40a as it passes through the nozzle array 30, 100. "Cool" means that the temperature of the liquid, immediately after it leaves a nozzle, is lower than the temperature of the air it cools. The liquid cools the air 40b before it reaches the inlet of the compressor. In other embodiments, the liquid may not be cool but may be the same temperature or warmer than the air flowing through the duct.

When the valve 46 opens, high pressure liquid is fed from liquid supply source 52 to the nozzle holder 30, 100 via liquid inlet conduit 44. The nozzles are configured to atomize the water into a spray of fine droplets. Such droplets typically range from about 3 to about 50 microns, and more typically from about 3 to about 30 microns.

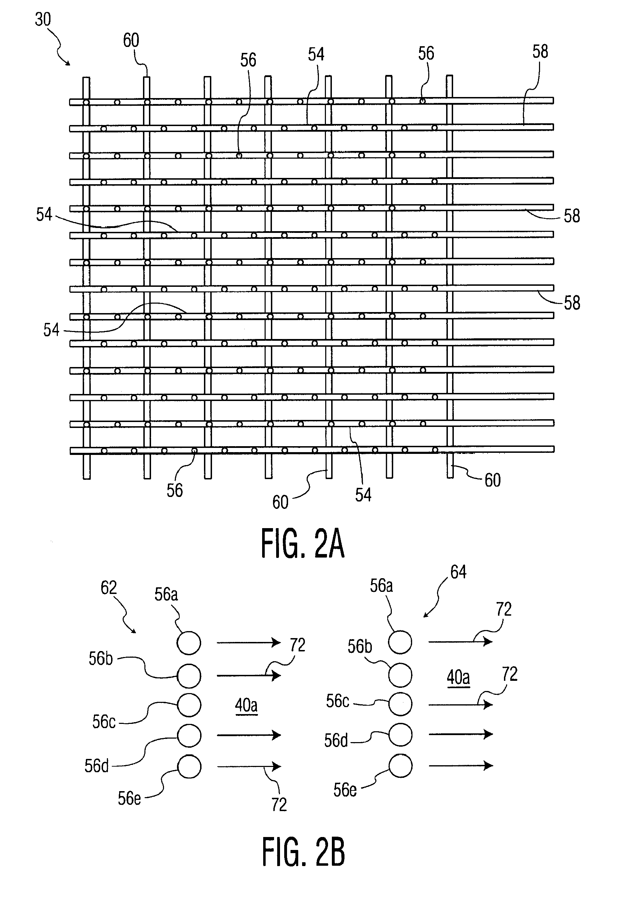

FIG. 2A shows a conventional nozzle array 30 that may be used in a system such as that shown in FIG. 1. Such an array 30 may be the SPRITS^{™} system from General Electric. The conventional nozzle array 30 shown comprises a plurality of horizontally-extending pipes 54 supported by vertically-extending bars 60. Each pipe 54 has a plurality of nozzles 56 along the horizontal length. The nozzles 56 are configured to spray droplets of water, generally no larger than 50 microns in diameter. The nozzles 56 are those generally known in the art and may be supplied by Parker Hannifin. As provided above, spray liquid having such small diameters is often said to be "fogged" and systems producing many small diameter droplets are often called fogging systems. The goal of the conventional system 30 is to humidify the air passing from the inlet (see FIG. 1) so that it is cooler before it enters the engine without over-saturating the air so that the liquid can evaporate before contacting the blades and damaging the engine.

The horizontal pipes 54 are in communication with a plurality of liquid supply conduits 58, which are in communication with liquid inlet conduit 44 (FIG. 1). Each conduit 58 supplies one stage of the system. The pipes 54 define a plurality of stages. Conventional nozzle array 30 usually comprises five stages. The SPRITS system may comprise five stages; about 1456 total nozzles, each operating at 3000 psi pressure. The stages are created by manifolding or coupling certain horizontal pipes.

The nozzles 56 are fed by a constant pressure source. Therefore, the proportion of nozzles 56 spraying is directly proportional to the fraction of the full system flow rate that is required to humidify the air at the current ambient conditions. For example, at half maximum flow, half the nozzles 56 in the array are activated or spraying liquid. All the liquid may be injected into a subset of the air flowing through in the inlet. As a consequence, the air around the injecting pipes or those stages that are activated, is often oversaturated. Because of the nozzle's location and the staging arrangements, these humidified, saturated or oversaturated areas cannot mix with dryer areas, thus distributing the liquid thereto. As a result, local areas of over-saturation find their way into the engine without the liquid evaporating, which damages the engine.

The over-saturation problem of a conventional array 30 is shown in FIG. 2B. FIG. 2B shows a simplified side view of two different staging arrangements 62, 64. Each arrangement 62, 64 has five nozzles 56a-56e. In arrangement 62, nozzles 56a, 56b, 56d, 56e are activated; i.e., spraying liquid 72 into air 40a. Nozzle 56c is inactivated. Adjacent nozzles 56a, 56b and 56d, 56e are activated at the same time; i.e., when the arrangement 62 is activated. This results in over-saturation just downstream of 56a, 56b and 56d, 56e. A portion of spray 72 from nozzles 56b and 56d mix with "drier" air 40a just downstream of nozzle 56c. However, because adjacent nozzles 56a, 56b, 56d, 56e are spraying at the same time and because there is relatively little air movement, saturated or humidified air from nozzle 56a, for example, tries to mix with saturated or humidified air from 56b. Similarly, spray 72 from nozzle 56e tries to mix with saturated or humidified air 40a just downstream of 56d. This results in local over-saturation just downstream of 56a, 56b and 56d, 56e. In other words, saturated or humidified air immediately downstream of the activated nozzles cannot easily mix with dry air.

The local-area-over-saturation problem is also illustrated in arrangement 64. Here, spray 72 immediately downstream of nozzles 56a and 56c can mix with the drier air 40a immediately downstream of nozzle 56b. However, areas of local over-saturation are produced by adjacent, activated nozzles 56c-56e, for the reasons described above.

Conventional nozzle arrays suffer from the above problems, in part, because they attempt to balance the humidification of the entire air flow over the entire cross-sectional area of the duct. As air flows through and within the duct, air within the duct covers substantially, the entire cross-sectional area of the duct. Conventional arrays are designed so that they attempt to humidify the air over the entire cross-sectional area of the duct with a single global staging strategy. In other words, they use multiple stages spread across the entire flow stream of air to humidify it. Conversely, the nozzle array of the present invention divides the entire cross-sectional array into a plurality of sub-divisions. It is designed to substantially equally humidify each sub-division of air flow individually, across and entire water flow delivery range, rather than attempting to saturate or humidify the entire air flow at one time. The level of water in each subsection of air may be relatively dry or may be substantially saturated.

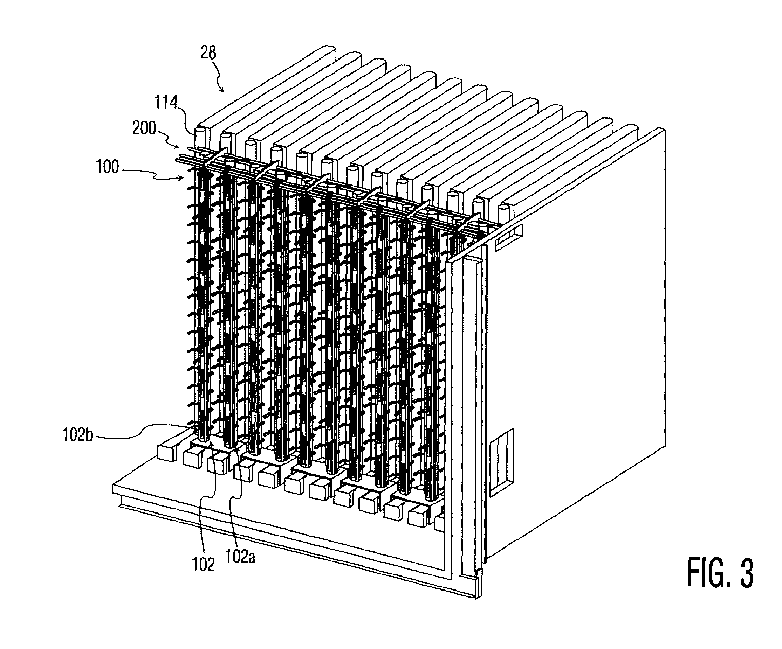

FIG. 3 shows one embodiment of an apparatus or system for cooling air 100 according to the present invention. The apparatus 100 is generally in the form of an array of nozzles. Each nozzle of the array is configured to spray small droplets of liquid, generally water, toward the inlet of the gas turbine compressor (FIG. 1). In other words, it may be a fogging system. In particular, the nozzles may be those generally known in the art (e.g., from Parker Hannifin) and described above. Unlike the conventional arrays, the nozzles of the present array may operate at less than about 2000 psi. It has been found that operating the nozzles at this pressure degrades the drop size distribution very little from nozzles operating at about 3000 psi but produces less stress on the system.

FIG. 3 shows the spray apparatus downstream of and coupled to a silencer 28. The spray apparatus may be positioned adjacent and downstream of a silencer because the silencer elements often generate the majority of the flow-induced mixing in a direction normal to the plane of the vertical nozzle arrays. The spray apparatus may be positioned virtually anywhere along the length of the duct and may not be coupled to a silencer.

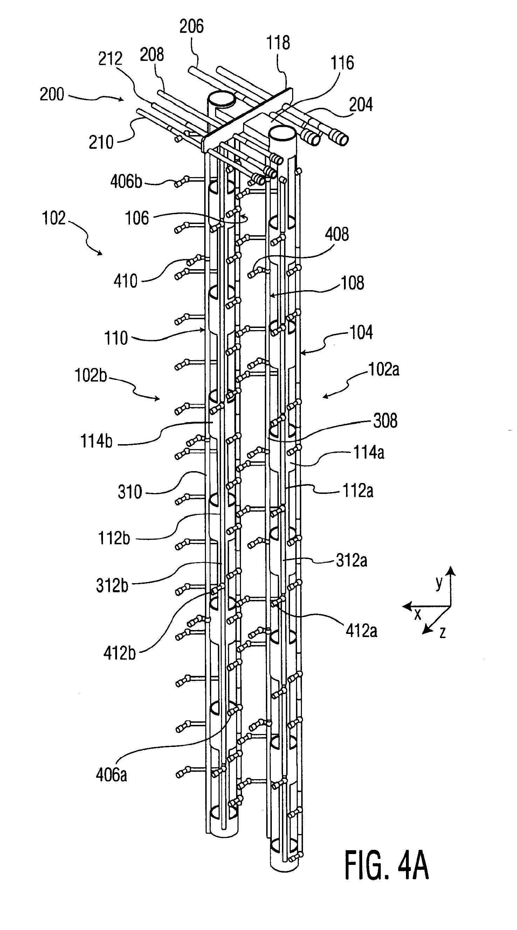

A plurality of nozzle sets or stages 104-112b (FIGS. 4A-4C) extend along the vertical direction. By vertical, it is meant that the nozzle stages are substantially perpendicular to a substantially horizontal ground plane. However, the nozzle stages may extend horizontally; i.e., substantially parallel to the ground plane, diagonally or at any angle with respect to the ground plane. In addition, the nozzle stages may be organized into a plurality of units 102, which are divided into subunits 102a, 102b, as explained below.

The array 100 is comprised of a plurality of stages, in communication with a plurality of liquid supply conduits 200 which are in communication with the liquid inlet conduit 44 (FIG. 1). Each stage is comprised of at least, a plurality of nozzles for delivering liquid to the air. In each stage, the nozzles are configured in a staging arrangement, which refers to the positions of the nozzles along the liquid distribution conduit. Each stage may also comprise at least one liquid distribution conduit (FIGS 4A-4C). Each liquid distribution conduit is in communication with the plurality of nozzles and the liquid inlet conduit. In other embodiments, each stage may not have a liquid distribution conduit. Rather, liquid may be supplied to each nozzle in the stage separately. Each stages is configured to spray varying amounts of volumes of liquid per unit time.

The liquid distribution conduits extend from the liquid supply conduits 200. The liquid supply conduits 200 may run in the horizontal direction along the top of the array 100. However, the liquid supply conduits 200 may run vertically, horizontally or diagonally. In addition, the liquid supply conduits 200 may be at the top of the liquid distribution conduits or may run along the bottom. Each stage is independently-operable. As such, liquid may be sprayed from one or some stages but not others or liquid may be sprayed from all or none of the stages.

In the embodiment shown in FIG. 3, the stages are arranged substantially vertically, in a series extending along the horizontal direction. In other words, the vertically-extending stages are lined up along the horizontal direction. In other embodiments, the stages of nozzles may be horizontal and, therefore, substantially parallel to the ground plane.

Each liquid distribution conduit may be coupled to at least one support column 114. The support column 114 may be virtually any structure that provides support for the nozzles and the liquid distribution conduits, where these are included. The support column 114 may be a four-inch diameter, hollow pipe. However, the support column 114 may have a rectangular, triangular, oval, etc. cross-section, may not be hollow, etc. In the embodiment shown in FIG. 3, the support columns 114 extend substantially vertically because the stages extend vertically. Where the stages extend diagonally, horizontally, etc., the support columns 114 may extend in other directions. For example, where the stages extend horizontally, the support columns may extend horizontally as well. The vertically-extending support columns 114 may be arranged in a series along the horizontal direction and may extend, in the vertical direction, to about the top of the elements of the silencer 28. Preferably, the support columns 114 are spaced equidistant from one another in the horizontal direction.

As shown in FIGS. 4A-4C and described in more detail below, the particular configuration of stages on each support column 114 comprises a subunit 102a, 102b of a plurality of identical, repeating units 102 that comprise the array 100. In particular, two support columns 114a, 114b having different stages each may comprise one unit 102 of the array 100. As shown in FIG. 3, these two support columns 114a, 114b may be coupled together. Each unit 102 may be coupled to the silencer 28. In other embodiments, the support columns 114 may be not be coupled to the silencer 28 but may stand alone. In addition, the stages 104-112b, or liquid distribution conduits, may not be coupled to support columns 114 but may stand alone or be coupled to another structure.

FIGS. 4A-4C show one unit 102 of the array shown in FIG. 3. The unit 102 is comprised of two subunits 102a, 102b. The support columns 114a, 114b are connected by a first cross-bar 116. Each subunit 102a, 102b is comprised of three stages and each unit 102 is comprised of a total of five stages. As shown in FIGS. 4A-5, the two subunits 102a, 102b may be spaced equidistant from one another.

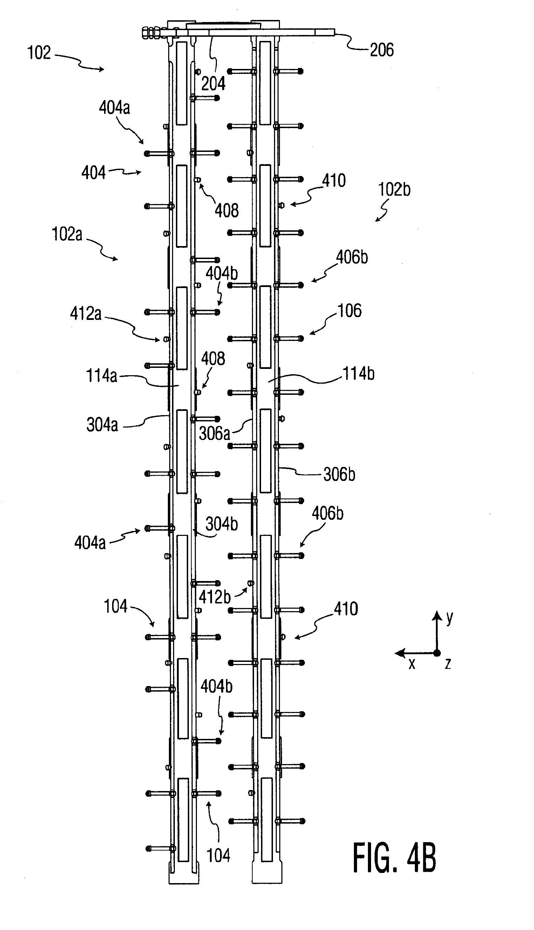

Subunit 102a comprises a first stage 104. As shown in FIG. 4B, the first stage 104 may comprise two first liquid distribution conduits 304a, 304b. In the embodiment shown in FIG. 4B, the two first liquid distribution conduits 304a, 304b extend along the vertical direction. The two first liquid distribution conduits 304a, 304b are attached to a first support column 114a. The two first liquid distribution conduits 304a, 304b run parallel to each other down the left and right-hand sides of the rear side of the first support column 114a. It will be understood that the first liquid distribution conduits 304a, 304b may be attached elsewhere or may be stand alone. In addition, only one liquid distribution conduit may be used in the first stage. As shown in FIG. 4A, coupled to the first support column 114a via a second cross-bar 118, is a first liquid supply conduit 204. Each of the two first liquid distribution conduits 304a, 304b are in communication with the first liquid supply conduit 204, which may run in the horizontal direction and may be substantially perpendicular to the first liquid distribution conduits 304a, 304b.

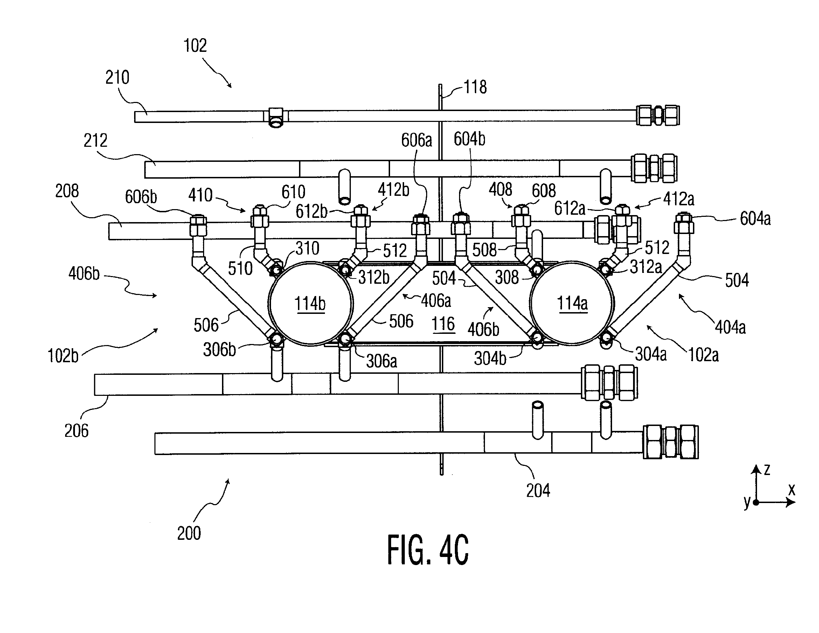

Along the length of the first liquid distribution conduits 304a, 304b are a plurality of first nozzles 404. These first nozzles are arranged in a first staging arrangement. As shown in FIG. 4B, the nozzles 404 extend from the liquid distribution conduits 304a, 304b via a first extension portion 504. In particular, nozzles 404a correspond to 304a and nozzles 404b correspond to 304b. As shown in FIG. 4C, attached to each of the first extension portions 504 is at least one first spray head 604a, 604b which is configured to spray a fine mist or fog of liquid therefrom. The first extension portions 504 may be angled about forty-five degrees with respect to the x-z plane. The first spray heads 604a, 604b may extend forward from the first extension portions 504 and are substantially perpendicular to the liquid distribution conduits 304a, 304b.

As shown in FIG. 4B, the first stage 104 may comprise twenty nozzles 404 with ten nozzles 404a extending along liquid distribution conduit 304a and ten nozzles 404b extending along liquid distribution conduit 304b. The nozzles 404 may be about 1 inch to about 10 inches apart in the vertical direction. More or less nozzles 404 may be included on either of the first liquid distribution conduits 304a, 304b and different spacing may be used. As shown in FIG. 4B, some nozzles 404 are substantially aligned with respect to the y-direction and some are not. As provided below, the position of the nozzles 404 in each stage is optimized for fully humidifying the air passing through the array, without over-saturating that air. The nozzles 404 are also configured to provide a substantially even distribution of liquid. In addition, as shown in FIG. 4B, the first nozzles 404 are substantially in-line with one another along an imaginary vertical line. In other words, each first nozzle 404a, 404b and, therefore, each first spray head 604a, 604b is aligned along the Y-direction if a vertical line is drawn along the Y-direction, through each first spray head 604a, 604b.

As shown in FIGS. 4A and 4C, subunits 102a and 102b may each comprise a second stage 112a, 112b. Second stage 112a is part of subunit 102a and is coupled to the first support column 114a. Second stage 112b is part of subunit 102b and is coupled to the second support column 114b. Second liquid supply conduit 212 is coupled to the second cross-bar 118 which is coupled to the first cross-bar 116. Second liquid distribution conduit 312a is coupled to right-hand front side of the first support column 114a and is in communication with second liquid supply conduit 212. Second liquid distribution conduit 312b is coupled to the right-hand front side of the second support column 114b and is in communication second liquid supply conduit 212. It will be understood that the second liquid distribution conduits 312a, 312b may be attached elsewhere or may stand alone. The second liquid supply conduit 212 may run substantially horizontally and substantially perpendicular to the second liquid distribution conduits 312a, 312b.

Along the length of each of the second liquid distribution conduits 312a, 312b are a plurality of second nozzles 412a, 412b. These second nozzles are arranged in a second staging arrangement. As shown in FIG. 4C, the second nozzles 412a, 412b comprise a second extension portion 512 extending from the second liquid distribution conduits 312a, 312b. Attached to the second extension portion 512 is at least one second spray head 612a, 612b which is configured to spray a fine mist or fog of liquid therefrom. As shown in FIG. 4C, the second extension portions 512 may be angled in the x-z plane about forty-five degrees. The second spray heads 612a, 612b extend forward from the second extension portions 512 and are substantially perpendicular to the liquid distribution conduits.

Second stage 112a may comprise seven nozzles 412a and second stage 112b may comprise four nozzles 412b. The nozzles 412a are about 1 inch to about 60 inches apart in the vertical direction. The nozzles 412b are about 1 inch to about 60 inches apart in the vertical direction. More or less nozzles may be included and the spacing of the nozzles may be altered. As shown in FIGS. 4A and 4B , second nozzles 412a are staggered with respect to first nozzles 404a and fourth nozzles 408. Second nozzles 412b are staggered with respect to third nozzles 410 and fifth nozzles 406a, 406b. The position of the nozzles in each stage is optimized for humidifying the air passing through the array, without over saturating that air. In addition, as shown in FIG. 4B, the second nozzles 412a are substantially in-line with one another along an imaginary vertical line. Second nozzles 412b are substantially in-line with one another along an imaginary vertical line. Second nozzles 412a are also substantially in-line with one another along an imaginary vertical line. In other words, the respective sets of second spray heads 612a and 612b are aligned along the Y-direction if a vertical line is drawn along the Y-direction, through each second spray head. The nozzles 412a, 412b are also configured to provide a substantially even distribution of liquid.

As shown in FIGS. 4A-4C, subunit 102b comprises a third stage of nozzles 110. The third stage 110 comprises one third liquid distribution conduit 310 extending in the vertical direction. The third liquid distribution conduit 310 is attached to the second support column 114b, preferably on the left-hand-side of the front side. It will be understood that the third liquid distribution conduit 310 may be attached elsewhere or may stand alone. In addition, more than one liquid distribution conduit may be used. Also attached to the second support column 114b is a third liquid supply conduit 210. The third liquid distribution conduit 310 is in communication with the one third liquid supply conduit 210, which may run in the horizontal direction and may be substantially perpendicular to the third liquid distribution conduit 310.

Along the length of the third liquid distribution conduit 310 are a plurality of nozzles 410. These third nozzles are arranged in a third staging arrangement. As shown in FIG. 4C, the nozzles 410 comprise a third extension portion 510 extending from the third liquid distribution conduit 310. Attached to the third extension portion 510 is at least one third spray head 610, which is configured to spray a fine mist or fog of liquid therefrom. The third extension portions 510 may be angled about forty-five degrees in the x-z plane. The third spray heads 610 extend forward from the third extension portions 510 and are substantially perpendicular to the liquid distribution conduit 310. As shown in FIG. 4C, the third extension portions 510 may run substantially parallel to fifth extension portion 506 and the third spray heads 610 may be substantially parallel to fifth spray head 606b. The third extension portions 510 may be inward of fifth extension portion 506.

The third stage 110 may comprise three nozzles 410. However, more or less nozzles may be included. As shown in FIGS. 4A and 4B , third nozzles 410 may be staggered with respect to fifth nozzles 406a, 406b. The position of the nozzles in each stage is optimized for humidifying the air passing through the array, without over saturating that air. The nozzles 410 are also configured to provide a substantially even distribution of liquid. In addition, as shown in FIG. 4B, the third nozzles are substantially in-line with one another along an imaginary vertical line. In other words, each third nozzle and, therefore, each third spray head is aligned along the Y-direction if a vertical line is drawn along the Y-direction, through each third spray head.

Subunit 102a also comprises a fourth stage 108. The fourth stage 108 comprises one, fourth liquid distribution conduit 308 extending in the vertical direction. As shown in FIG. 4A, the fourth liquid distribution conduit 308 is attached to the first support column 114a, preferably on the left-hand-side of the front side. It will be understood that the fourth liquid distribution conduit 308 may be attached elsewhere or may stand alone. In addition, more liquid distribution conduits may be used. Also attached to the first support column 114a via first cross-bar 116 and second cross-bar 118, is a fourth liquid supply conduit 208. The fourth liquid distribution conduit 308 is in communication with the one fourth liquid supply conduit 208, which may run in the horizontal direction and is preferably substantially perpendicular to the fourth liquid distribution conduit 308.

Along the length of the fourth liquid distribution 308 conduit is a plurality of fourth nozzles 408. These fourth nozzles are arranged in a fourth staging arrangement. As shown in FIG. 4C, the fourth nozzles 408 comprise a fourth extension 508 portion extending from the fourth liquid distribution conduit 308. Attached to the fourth extension portion 508 is at least one fourth spray head 608, which is configured to spray a fine mist or fog of liquid therefrom. The fourth extension portions 508 may be angled forward, about forty-five degrees with respect to the x-z plane. The fourth spray heads 608 may extend forward from the fourth extension portions 508 and are substantially perpendicular to the liquid distribution conduit 308. As shown in FIG. 4C, the fourth extension portions 508 and fourth spray heads 608 are inward of the first extension portion 504 and first nozzle spray heads 604b and are spaced equidistant therefrom.

The fourth stage 108 may comprise seven nozzles 408. However, more or less nozzles may be included. As shown in FIGS. 4A and 4B , preferably, the nozzles 408 of the fourth stage 108 are staggered in the y-direction with respect to nozzles 404 and 412a. The position of the nozzles in each stage is optimized for humidifying the air passing through the array, without over saturating that air. The nozzles 408 are also configured to provide a substantially even distribution of liquid. In addition, as shown in FIG. 4B, the fourth nozzles are substantially in-line with one another along an imaginary vertical line. In other words, each fourth nozzle and, therefore, each fourth spray head is aligned along the Y-direction if a vertical line is drawn along the Y-direction, through each fourth spray head.

Subunit 102b may also comprise a fifth stage 106. As shown in FIG. 4B, the fifth stage 106 comprises two fifth liquid distribution conduits 306a, 306b extending in the vertical direction. The two liquid distribution conduits 306a, 306b are attached to a second support column 114b. The two fifth liquid distribution conduits 306a, 306b run parallel to each other along the left and right-hand sides of the rear side of the second support column 114b. The fifth liquid distribution conduits 306a, 306b may be attached elsewhere or may be stand alone. In addition, one liquid distribution conduit may be used. Also attached to the second support column 114b via first cross-bar 116 and second cross-bar 118, is a fifth liquid supply conduit 206. Each of the two fifth liquid distribution conduits 306a, 306b are in communication with the one fifth liquid supply conduit 206, which may run in the horizontal direction and is preferably substantially perpendicular to the fifth liquid distribution conduits 306a, 306b.

Along the length of the fifth liquid distribution conduits 306a, 306b are a plurality of nozzles 406a, 406b. These fifth nozzles are arranged in a fifth staging arrangement. As shown in FIG. 4C, the nozzles 406a, 406b extend from the liquid distribution conduits 306a, 306b via a fifth extension portion 506. Attached to each of the fifth extension portions 506 is at least one fifth spray head 606a, 606b, which is configured to spray a fine mist or fog of liquid therefrom. As shown in FIG. 4C, the fifth extensions 506 may be angled about forty-five degrees with respect to the x-z plane. The fifth spray heads 606a, 606b extend forward from the fifth extension portions 506 and are substantially perpendicular to the liquid distribution conduits 306a, 306b.

The fifth stage 106 may comprise thirty nozzles with fifteen nozzles 406a extending along liquid distribution conduit 306a and fifteen nozzles 406b extending along liquid distribution conduit 306b. The nozzles 406a may be about 1 inch to about 60 inches apart in the vertical direction. The nozzles 406b may be about 1 inch to about 60 inches apart in the vertical direction. More or less nozzles may be included on either of the fifth liquid distribution conduits 306a, 306b and the nozzles 406a, 406b may be spaced differently. As shown in FIG. 4B, all of the nozzles 406 are substantially aligned in the y-direction. The position of the nozzles 406 in each stage is optimized for humidifying the air passing through the array, without over saturating that air. The nozzles 406a, 406b are also configured to provide a substantially even distribution of liquid. In addition, as shown in FIG. 4B, the fifth nozzles are substantially in-line with one another along an imaginary vertical line. In other words, each fifth nozzle and, therefore, each fifth spray head is aligned along the Y-direction if a vertical line is drawn along the Y-direction, through each fifth spray head.

Subunits 102a and 102b with the five nozzle stages 104-112b comprise one unit 102. As shown in FIG. 3, the array 100 is comprised of a plurality of spaced units. The units may be spaced equidistant from one another in any direction, for example, vertically, horizontally, diagonally, etc. The direction in which the units are spaced depends upon how the subunits are oriented. The array 100 may include thirteen units, which is twenty-six total subunits. More or less subunits and units may be included. In addition, the subunits 102a and 102b and the first support column 114a and second support column 114b may be spaced equidistant from one another. In particular, the first support column 114a may be about 1 inch to about 40 inches from the second support column 114b. The units are about 1 inch to about 40 inches apart. The nozzle stages 104-112b are shown as being attached to the first 114a and second 114b support columns, however, the nozzle stages 104-112b may be attached to other structures or be stand alone.

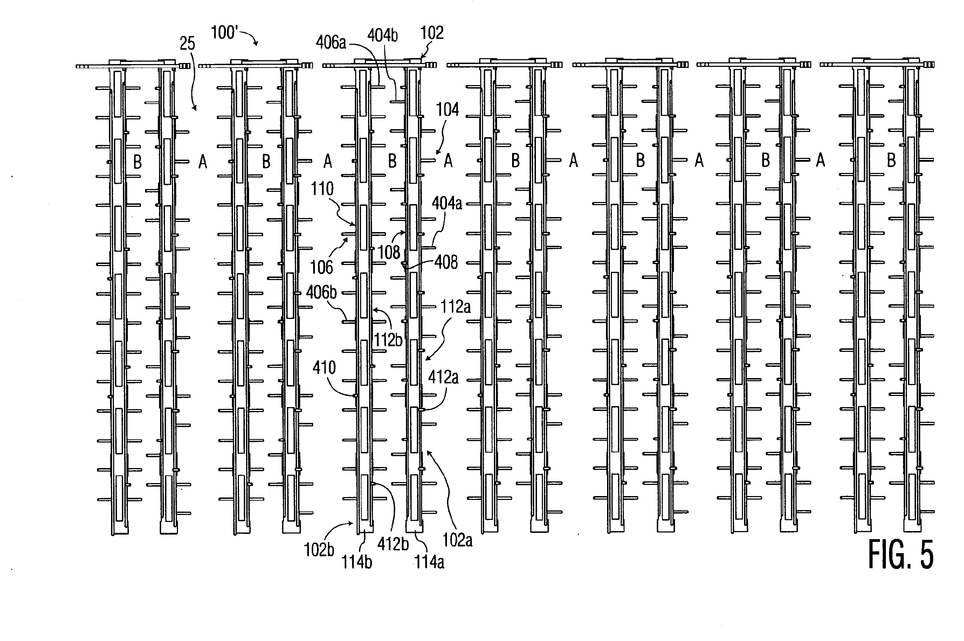

FIG. 5 shows a portion 100' of the array 100 shown in FIG. 3. In particular, it shows fourteen subunits 102a, 102b and seven units 102. Only one unit is labeled but it will be understood that the remaining units follow the same convention. As provided above, the nozzle array may fill the entire cross-sectional area of the interior of a duct. In the portion 100' of the array shown in FIG. 5, the cross-sectional area is designated as 25. FIG. 5 shows that each subunit 102 may be spaced apart to create or define at least one subsection of the entire cross-sectional area 25. Where there are two subunits 102a, 102b creating a unit 102, as in the version of FIG. 5, the units may be spaced apart to create or define another subsection of the entire cross-sectional area. In the version shown in FIG. 5, units 102 extend vertically and are spaced apart in the horizontal direction to create first subunit A. Subunits 102a, 102b extend vertically and are spaced apart in the horizontal direction to create second subunit B. It will be understood that the subunits and units may extend in virtually any direction. For example, subunits and units may extend horizontally and be spaced apart along the vertical direction and, therefore, create horizontal subsections.

FIG. 5 shows the subunits 102a, 102b spaced equidistant from one another and the units 102 spaced equidistant from one another. As such, every subsection has the same area. In other words, all B subsections have the same area and all A subsections have the same area. In other embodiments, the spacing between the subunits and units may be different, creating subsections having different areas. In the embodiment shown in FIG. 3, there are twenty-six total subunits 102a, 102b and thirteen units 102. Thus, there are twenty-six vertical gaps or subsections A, B for the air 40a (FIG. 1) to pass through with thirteen of those gaps being the first gaps A and thirteen being second gaps B. More or less gaps or subsections may be created by the nozzle array in other embodiments.

FIG. 5 shows that at least four nozzle stages are configured to deliver liquid to each subsection A and B. In particular, first nozzles 404b, fourth nozzles 408, second nozzles 412b, and fifth nozzles 406a are positioned to deliver liquid to subsection B. First nozzles 404a, second nozzles 412a, third nozzles 410 and fifth nozzles 406b are positioned to deliver liquid to subsection A. It is noted that in some embodiments, spray may not be delivered to subsections adjacent the walls of the duct so as to not saturate and damage these walls.

As shown in FIG. 1 as discussed above, ambient air 40a enters the inlet of the duct and passes through substantially the cross-sectional area 25 of the duct. As such, with the nozzle array of the present invention 100, the air passes through subsections A and B. Because the nozzle set positions multiple stages adjacent a plurality of subsections of the cross-sectional area, it is configured to deliver an amount of liquid required to humidify and, possibly saturate or substantially saturate, the air flowing through each subsection. In particular, first nozzles 404b, second nozzles 412b, fourth nozzles 408 and fifth nozzles 406a are capable of delivering an amount of liquid required to humidify the air flowing through subsection B. First nozzles 404a, second nozzles 412a, third nozzles 410 and fifth nozzles 406b are capable of delivering an amount of liquid required to humidify the air flowing through subsection A. Preferably, the air passing through subsections A and B is substantially equally humidified; in other words, the air has roughly the same humidity level. In this regard, the amount of liquid provided to each subsection may be substantially proportional to a fractional cross-sectional area of the particular subsection. Each subsection has a water to air ratio that is the substantially equal to the bulk water to air ratio; i.e., the water to air ratio of the entire flow of the ambient air through the entire cross-sectional area. Moreover, each subset receives the same amount of water at any given time. As the air passes through each subsection, it is humidified with relatively cool liquid sprayed from any of the nozzles of the nozzle stages. The humidified air has a lower temperature than it does before it passes through the array. The lower temperature air has a higher density, which allows it to more effectively feed the engine.

As provided above, the stages together are capable of delivering an amount of liquid required to substantially equally humidify the air flowing through a subsection, at any given amount of liquid spray. They are also configured to deliver the same amount of liquid to each subsection and are configured to provide an even distribution of water over the subsection. For example, at a first ambient temperature and first ambient humidity level, only the first nozzles may operate. Here, nozzles first nozzles 404b only, deliver liquid to subsection B and first nozzles 404a only, deliver liquid to subsection A. At a second predetermined temperature, which is usually higher than the first predetermined temperature, and possibly, at a second humidity level, which may be lower than the first, at least one of the second nozzles may be then activated. The third, fourth and fifth stages of nozzles may be subsequently activated as the temperature increases and, in particular, when it reaches certain pre-determined levels. The nozzles of the various nozzles stages will be activated and deactivated in various combinations depending upon at least the temperature and humidity of the air flowing through the nozzle array. Preferably, every nozzle in a particular nozzle stage sprays at the same time and each nozzle stage is independently-controllable. For example, the first nozzle stage may be activated such that pressurized water is sprayed from every nozzle of the first stage, only. The nozzles of the second nozzle stage may be then activated. It is anticipated that the first stage will be activated mostly all the time that the system is operating.

In certain embodiments the array may not have all five stages. For example, where the array is used in areas having a relatively constant temperature or humidity level, the array may have only a first stage. Or, the array may comprise only a first stage and a second stage defining the subsections. What is important is that the overall cross-section is divided into a plurality of smaller subsections, that each subsection receives substantially the same amount of liquid and that the nozzles are configured to substantially equally humidify the air flowing through each subsection at amount of liquid spray or flow range, possibly, be able to substantially saturate the air in each subsection and provide an even distribution of liquid. A flow range or operating range is a range of conditions of the air to-be-humidified. For example, it may be about 70°F and about 60% relative humidity to about 120°F and about 10% relative humidity.

With each subsection humidified to substantially the same degree, the entire volume of inlet air is uniformly humidified. By dividing the overall cross-sectional area into a plurality of subunits and delivering liquid to each subunit, the present nozzle array more uniformly humidifies the inlet air than conventional nozzle arrays, which are designed to attempt to humidify the overall cross-sectional area of the duct at one time. In addition, the nozzles are arranged to optimally distribute the water as evenly as possible. At maximum flow; i.e., when all five stages are activated, there may be one nozzle about every four inches, staggered on either side of air gaps A and B. As such, the array is able to cover substantially all areas of the air gaps in the horizontal and vertical directions. As a result there is no or a very minimal amount of local over-saturation and the mixing of air and water is much improved.

The conventional arrays also do not divide the overall cross-sectional area into a plurality of subunits and then deliver the required liquid to each subunit. As such, local areas of over-saturation result. Conversely, the present design provides an optimal mixing of liquid spray and dry air near the array, which is not seen in the conventional arrays. The mixing is optimal because it locally provides substantially the bulk mean ratio of dry air to water. In other words, there are no or substantially fewer local areas of over-saturation and local areas of dry air. The air temperature has the potential to be lowered to a greater extent than with conventional systems at the same, non-saturating water flowrate. Further, the mixing occurs near the array as opposed to further downstream. This gives the spray more time to evaporate before approaching or entering the compressor. The present design spreads the nozzles, that will be spraying at any given time, more evenly over the inner area of the duct than conventional arrays. Thus, the nozzles are positioned to maximize water evaporation.

In addition, the nozzle set-up may position areas of greater humidification or even saturation next to areas of less humidification or relatively dry areas. In some embodiments, some subsections or air gaps may be larger than others and may receive less liquid. The larger gap may be adjacent a smaller gap, which may be richer in liquid. Alternating smaller and larger or richer and leaner areas of humidification may provided more uniform mixing of air and water. In other words, the present design minimizes the difficulty of the spray finding the driest possible air. This is achieved by a system that divides the total cross-sectional area and, therefore, cannot be achieved by the conventional arrays. Conventional areas often have many consecutive areas of saturation or over-saturation. Because the saturated or over-saturated air is relatively far away from unsaturated or dry air, there is less of a chance that the dry air and saturated or overly-saturated air will mix, especially near the array where it is most beneficial. This is one reason why conventional systems tend to over-saturate the air in certain areas while leaving other areas of air dry.

In addition to being arranged to cover substantially the entire area of the air gaps, the present design takes advantage of the motion of the air in the duct inlet to maximize the mixing efficiency downstream of the array. Thus, it more effectively uses the flow patterns generated near the silencer, which substantially homogenizes the flow of air. In this regard, the nozzle stages extend along the same direction as the silencer elements. In the embodiment shown, this is along the vertical direction.

As described above, one pump 48 (FIG. 1) may feed liquid to the first liquid supply conduit 204, second liquid supply conduit 212, third liquid supply conduit 210 and fourth liquid supply conduit 208. A second pump (not shown) may feed liquid to only the fifth liquid supply conduit 206. As provided above and shown in FIG. 1, the pumped liquid passes through inlet or source conduit 44. It is then distributed to the liquid supply conduits 200 and then to the liquid distribution conduits 300. Nozzles may be selectively opened to spray atomized water droplets.

To activate the nozzle stages sharing the same pump, for example, the first stage through the fourth stage, these stages of nozzles may first be pre-filled with liquid. This is to minimize the time it takes to stabilize the system after changing a stage. The pre-fill operation may be conducted as follows. The control system determines that the active stages need to be changed; i.e., a stage may need to be deactivated or activated. In one embodiment, every staging action opens one stage and closes another except when the fifth stage is activated. The controller opens a pre-fill valve for the stage that is about to be activated. A low pressure pump, which operates at less than about 200 psi, starts and fills the stage to-be-activated. When the pre-fill reaches a certain pressure, the valve is closed and the pump is stopped. A main stage valve opens for the new stage. Once this is opened, the stage valve for the stage being retired is closed. In one embodiment, the next stage is always opened before closing the prior stage to ensure that the pump is not over back-pressured.

The ambient conditions in which spray systems operate often require large variations in the amount of water supplied to the nozzles; typically, a minimum to maximum range of 2.4 times. Each stage has a range of 1.3-1.4 inches, times the minimum flow being generated at any given time. As provided above, the present array may be driven by a variable speed pump. The array may require a flow range of about 4 times for arid conditions. (This is calculated by taking 1.3 to the fifth power (1.3⁵, for the five stages).) The turndown is driven by the range of ambient conditions covered. For temperate systems, a range of 2.4 times is adequate and therefore only four stages are needed by these systems As provided above, the conventional systems suffer from disadvantages in using fixed pressure, re-circulating pumps. The VFD pumps used in the present design substantially reduce or eliminate these problems. These VFD pumps match with a four stage design because the pumps give the same 2.4 time-flow range that a four stage array requires. Accordingly, the present design feeds four stages; first through fourth stage, from a common pump. The fifth stage may use a single pump feeding this single stage. Unlike the conventional systems, this pump may be VFD controlled and supplies a variable flow rate.

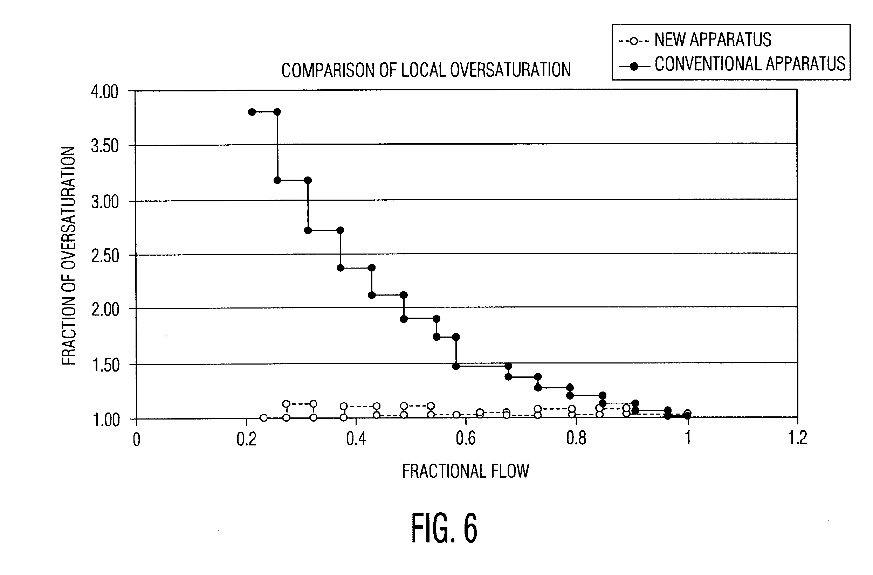

FIG. 6 shows a graph of Fraction of Saturation versus Fractional Flow of the conventional array and the array of the present invention. Fractional flow is the flow rate divided by the design flow rate, which is equal to 1. In other words, it is the fraction of total distribution conduits in the array that are actually flowing at a given time. At full flow, fractional flow is equal to 1. At 2, about half the pipes are flowing and about 0.25, about 4 of the pipes are flowing.

The data of FIG. 6 was obtained by calculation. For each gap, it was determined what fraction of total distribution conduits in the array are actually flowing. With respect to the present invention the two air gaps; i.e., gap A and B (FIG. 5) were examined. It was determined how many nozzles were flowing for one gap versus the other gap. This determined the theoretical ratio of over-saturation. In other words, the test compared the amount of water in subsection A versus the amount of water in subsection B. The slight over-saturation that may occur with the present invention is sporadic and may occur only when either stage 3 or 4 is activated because stage 3 is only on one subunit and stage 4 is on the other subunit. For example, at about 0.3, there may be a slight amount of over-saturation because stage 4 is activated.

FIG. 6 also shows the level of over-saturation in the air stream surrounding the injector, which is defined as halfway to the next pipe on each side for the convention array and per air gap for the present design. This is the point from which any post injection mixing starts. FIG. 6 shows that the level of mal-distribution; in other words, overly-saturated areas and overly-dry areas, are generally much less with the present array than the conventional array. Additionally, gaps "rich" with water and those that are dry are adjacent. The flow is layered as slightly oversaturated followed by slightly dry, followed by slightly oversaturated, etc. This is not the case with the conventional systems. For example, at about 0.23, about 3.7 air gaps are over-saturated with the conventional system but only about 1 is saturated with the present design. FIG. 6 also shows that the laterally repeatable mal-distribution is in the same plane as the vortices being shed by the structures has a much better chance of being reduced, relative to the vertical stratification in the conventional designs.

Although the invention has been described and illustrated with respect to exemplary embodiments thereof, it should be understood by those skilled in the art from the foregoing that various other changes, omissions and additions may be made therein and thereto, without parting from the spirit and scope of the present invention.

## Claims

1. A power augmentation system comprising:
a passage having at least one air inlet, the passage configured to allow the passage of air therethrough;
a turbine positioned downstream of the air inlet;
a nozzle array positioned downstream of the air inlet and upstream of the turbine, the nozzle array comprising a plurality of stages, the nozzle array defining a plurality of subsections of a cross section of the passage through which air passes as it moves through the nozzle array toward the turbine,
wherein each stage comprises a plurality of nozzles configured to humidify the air moving through a plurality of the subsections by spraying liquid,
wherein each stage is configured to spray varying amounts of liquid, and
wherein the stages are configured to substantially equally humidify the air flowing through the plurality of the subsections at any amount of liquid spray.

2. The power augmentation system of claim 1, wherein the stages comprise a first stage and a second stage, wherein all of the nozzles in the first stage have the same first staging arrangement and all the nozzles in the second stage have the same second staging arrangement.

3. The power augmentation system of claim 2, wherein each of the nozzles in the first stage are configured to simultaneously spray substantially the same amount of liquid into the subsections.

4. The power augmentation system of claim 2, comprising a plurality of first stages of nozzles, wherein the first stages of nozzles are spaced equidistant from one another, creating the subsections.

5. The power augmentation system of claim 2, further comprising a plurality of third stages of nozzles, each third stage of nozzles comprising a plurality of third spray nozzles in a third staging arrangement, each third spray nozzle configured to humidify the air as the air moves through the subsections by spraying liquid.

6. The power augmentation system of claim 5, wherein one first stage of nozzles and one second stage of nozzles are positioned adjacent each other and together, define a first subunit of a unit of the nozzle array,
wherein one third stage of nozzles is spaced from the first subunit, the third stage of nozzles defining a second subunit of the unit,
wherein the nozzle array is comprised of a plurality of repeating units,
wherein the space between the first subunit and the second subunit defines a first subsection of the cross-section of the passage, and
wherein the units are spaced apart so as to define a second subsection of the cross-section of the passage.

7. The power augmentation system of claim 6, wherein each of the first stages of nozzles, each of the second stages of nozzles and each of the third stages of nozzles are configured so that together, they are capable of substantially equally humidify the air flowing through the subsections, at any amount of liquid spray.

8. The power augmentation system of claim 7, further comprising a plurality of fourth stages of nozzles, each fourth stage of nozzles comprising a plurality of fourth spray nozzles in a fourth staging arrangement, each fourth spray nozzle configured to humidify the air as the air moves through the subsections by spraying liquid.

9. The power augmentation system of claim 8, wherein each fourth stage of nozzles is positioned adjacent one first stage of nozzles and one second stage of nozzles to further define the first subunits of the units.

10. The power augmentation system of claim 9, further comprising a plurality of fifth stages of nozzles, each fifth stage of nozzles comprising a plurality of fifth spray nozzles in a fifth staging arrangement, each fifth spray nozzle configured to humidify the air as the air moves through the subsections by spraying liquid therein, wherein each fifth stage of nozzles is positioned adjacent one third stage of nozzles to further define the second subunit.

11. The power augmentation system of claim 10, wherein the stages on each unit are capable together, of delivering an amount of liquid required to substantially equally humidify the air flowing through the first subsection and second subsection at any amount of liquid spray.

12. A method of humidifying air for increasing output of an engine, the method comprising:
providing an air passage having at least one air inlet and a total cross-sectional area through which air flows;
providing a plurality of stages of nozzles, each stage comprising a plurality of nozzles configured to inject liquid into the air, each stage having a water flow operating range;
dividing the cross-sectional area of the passage into a plurality of subsections, each having an area smaller than the total cross-sectional area;
providing an engine down stream of the air inlet and the stages of nozzles;
determining a temperature and humidity of the air at a first time;
determining an amount of humidity required to increase the output of the engine;
and
providing, via the nozzles, a first amount of liquid to a plurality of the subsections, wherein the first amount of liquid is that which is required to substantially equally humidify the air flowing through the subsections, across the entire water flow operating range, in the amount required to increase the output of the engine.

13. The method of claim 12, wherein the first amount of liquid provided to the subsections is substantially proportional to a fractional cross-sectional area of the particular subsection.

14. The method of claim 12, wherein the stages of nozzles are positioned such that they divide the cross-sectional area of the passage into the plurality of subsections.

15. The method of claim 12, wherein the temperature and humidity are ambient temperature and humidity.

16. The method of claim 14, wherein the plurality of subsections have a substantially equal area.

17. The method of claim 15, further comprising:
monitoring and determining the ambient temperature; and
if the ambient temperature increases beyond that measured at the first time, providing, via the nozzles, a greater amount of liquid to each subsection,
if the ambient temperature decreases beyond that measured at the first time, providing, via the nozzles, a lesser amount of liquid to each subsection.

18. The method of claim 15, further comprising:
monitoring and determining the ambient humidity; and
if the ambient humidity increases beyond that measured at the first time, providing, via the nozzles, a lesser amount of liquid to each subsection,
if the ambient humidity decreases beyond that measured at the first time, providing, via the nozzles, a greater amount of liquid to each subsection.

19. A method ofhumidifying air, the method comprising:
providing an air passage having at least one air inlet and a total cross-sectional area through which air flows;
dividing the cross-sectional area of the passage into a plurality of subsections, each having an area smaller than the total cross-sectional area;
providing a plurality of nozzles adjacent each subsection, the nozzles configured to inject liquid into air;
providing to a plurality of the subsections, an amount of a liquid required to substantially equally humidify the air flowing through the subsections, across an entire water flow operating range.

20. The method of claim 19, wherein the amount of liquid provided to the subsections is substantially proportional to a fractional cross-sectional area of the subsection.

21. The method of claim 19, further comprising positioning a turbine downstream of the air inlet.

22. The method of claim 19, further comprising determining a temperature and humidity of the air before the humidifying step.

23. The method of claim 19, further comprising determining the amount of water required to substantially equally humidify the air in the subsections after the determining a temperature and humidity of the air step.

24. The method of claim 19, further comprising providing at least three different stages of nozzles in the providing a plurality of nozzles step, wherein each stage of nozzles has a different nozzle configuration.

25. The method of claim 23, wherein the amount of liquid injected in the humidifying step is based upon the temperature and humidity of the air.

26. The method of claim 25, further comprising providing an amount of water required to substantially equally humidify the air in the subsections after the determining the amount of water required to humidify the air step.
